# EUROPÄISCHE PATENTSCHRIFT

(11) **EP 2 689 537 B1**
(45) Veröffentlichungstag und Bekanntmachung des Hinweises auf die Patenterteilung: **24.12.2014**
(21) Anmeldenummer: 12706459.0
(22) Anmeldetag: 17.02.2012
(51) Int. Cl.: H04B 5/00

(54) **ANLAGE MIT EINEM STATIONÄREN TEIL UND EINEM DAZU RELATIV BEWEGBAR ANGEORDNETEN MOBILTEIL**
SYSTEM HAVING A STATIONARY PART AND A MOBILE PART ARRANGED SUCH THAT IT CAN BE MOVED RELATIVE THERETO
DISPOSITIF COMPORTANT UNE PARTIE STATIONNAIRE ET UNE PARTIE MOBILE DISPOSÉE MOBILE PAR RAPPORT À LA PARTIE STATIONNAIRE

(30) Priorität: 23.03.2011 DE 102011014887
(43) Veröffentlichungstag der Anmeldung: 29.01.2014
(73) Patentinhaber: Sew-Eurodrive GmbH & Co. KG, 76646 Bruchsal (DE)
(72) Erfinder: HUA, Zhidong, 76131 Karlsruhe (DE); SCHMIDT, Josef, 76676 Graben-Neudorf (DE)
(74) Vertreter: Tüngler, Eberhard
(86) Internationale Anmeldenummer: PCT/EP2012/000717
(87) Internationale Veröffentlichungsnummer: WO 2012/126555

(56) Entgegenhaltungen:
- WO-A1-2005/036569
- DE-A1- 2 904 978
- GB-A- 2 376 801

## Beschreibung

Die Erfindung betrifft eine Anlage mit einem stationären Teil und einem dazu relativ bewegbar angeordneten Mobilteil.

Es ist bekannt Mobilteile induktiv aus einem stationär verlegten Primärleiter zu versorgen.

**Aus der** WO 2005 / 036569 A1 **ist eine Anordnung zur berührungslosen induktiven Übertragung elektrischer Leistung bekannt.**

**Aus der** DE 29 04 978 A **ist ein Antennensystem für elektronische Sicherungsanlagen bekannt.**

**Aus der** GB 2 376 801 A **ist eine Antenne bekannt, die Fernfeldstrahlung unterdrückt.**

Der Erfindung liegt daher die Aufgabe zugrunde, eine Anlage mit einem stationären Teil und einem dazu relativ bewegbar angeordneten Mobilteil weiterzubilden, wobei eine trotz hoher Feldstärken ungestörte Kommunikation ermöglicht sein soll.

Erfindungsgemäß wird die Aufgabe bei der Anlage nach den in Anspruch 1 **oder 2** angegebenen Merkmalen gelöst.

Wichtige Merkmale der Erfindung bei der Anlage **sind,** dass die Anlage mit einem stationären Teil und einem dazu relativ bewegbar angeordneten Mobilteil ausgeführt ist,
wobei das Mobilteil eine Sekundärwicklung aufweist, die induktiv an einen langgestreckt im stationären Teil der Anlage angeordneten Primärleiter angekoppelt ist,
insbesondere wobei der Primärleiter mit einem Wechselstrom zwischen 10 und 1000 kHz beaufschlagbar ist,
insbesondere wobei der Sekundärwicklung eine Kapazität parallel und/oder in Reihe zugeschaltet ist, dass die zugehörige Resonanzfrequenz im Wesentlichen der Frequenz des Wechselstroms entspricht,
wobei am Mobilteil eine erste Antenne und am stationären Teil eine zweite Antenne angeordnet ist,
wobei jede Antenne als Wicklung mit Mittelanzapfung ausgeführt ist, wobei die so gebildeten ersten und zweiten Teilwicklungen voneinander beabstandete umwickelte Flächen aufweisen und jeweils eine derartige Wicklungszahl und eine derartig große umwickelte Fläche aufweisen, dass die von einem im Raumbereich der Antenne homogenen Wechsel-Magnetfeld induzierten Spannungen betragsgleich sind.

Alternativ sind wichtige Merkmale bei der Anlage mit einem stationären Teil und einem dazu relativ bewegbar angeordneten Mobilteil, dass das Mobilteil eine Sekundärwicklung aufweist, die induktiv an einen langgestreckt im stationären Teil der Anlage angeordneten Primärleiter angekoppelt ist,
insbesondere wobei der Primärleiter mit einem Wechselstrom zwischen 10 und 1000 kHz beaufschlagbar ist,
insbesondere wobei der Sekundärwicklung eine Kapazität parallel und/oder in Reihe zugeschaltet ist, dass die zugehörige Resonanzfrequenz im Wesentlichen der Frequenz des Wechselstroms entspricht,
wobei am Mobilteil eine erste Antenne und am stationären Teil eine zweite Antenne angeordnet ist,
wobei jede Antenne eine erste Teilwicklung und eine zweite Teilwicklung aufweist, welche jeweils eine derartige Wicklungszahl und einen derartigen Wicklungssinn und eine derartig große umwickelte Fläche aufweisen, dass die von einem homogenen Wechsel-Magnetfeld induzierten Spannungen betragsgleich sind und entgegengesetztes Vorzeichen aufweisen.

Von Vorteil ist dabei, dass in dem starken homogenen Feld der Primärleiterschleife eine ungestörte Datenübertragung ermöglicht ist, wobei als Antenne nur eine einfache Wicklung mit zwei Teilwicklungen auszuführen ist. Die Antennen erlauben also eine induktive Kopplung zueinander und somit eine entsprechende Datenübertagung im Nahfeld. Aber auch im Fernfeld ist die Erfindung verwendbar.

Bei einer vorteilhaften Ausgestaltung ist die Wicklungszahl der Teilwicklungen gleich
und/oder die umwickelte Fläche ist betragsgleich
und/oder der Wicklungssinn der Teilwicklungen ist entgegengesetzt ausgeführt. Von Vorteil ist dabei, dass vom homogenen Feld in beiden Teilwicklungen derselbe Spannungsbetrag induziert wird und somit das homogene Feld die Datenübertragung nicht stört. Die Antennen sind aber in der Lage bei geeigneter relativer Positionierung zueinander Daten zu übertragen, wobei sogar bei gleicher Frequenz wie die Primärleiterfrequenz eine ungestörte Datenübertragung ermöglicht ist.

Bei einer vorteilhaften Ausgestaltung sind die erste und zweite Antenne gleichartig, insbesondere baugleich, ausgeführt. Von Vorteil ist dabei, dass bei möglichst nahe sich gegenüber stehenden Antennen eine sehr starke Kopplung erreichbar ist und somit ein sehr gutes Signal-Rausch-Verhältnis.

Bei einer vorteilhaften Ausgestaltung ist die zweite Antenne symmetrisch zum Primärleiter angeordnet, insbesondere mittig zu einem als Hinleiter fungierenden Primärleiterabschnitt und als Rückleiter fungierenden Primärleiterabschnitt. Von Vorteil ist dabei, dass das jeweilige die beiden Teilwicklungen durchströmende Feld im Wesentlichen gleich große Spannungsbeträge induziert.

Bei einer vorteilhaften Ausgestaltung ist die zweite Antenne, insbesondere deren umwickelte Fläche parallel zu der von dem als Hinleiter fungierenden Primärleiterabschnitt und von dem als Rückleiter fungierenden Primärleiterabschnitt aufgespannten Ebene ausgerichtet. Von Vorteil ist dabei, dass ein hohes Signal-Rausch-Verhältnis erreichbar ist.

Bei einer vorteilhaften Ausgestaltung ist die erste Antenne derart bewegbar mit dem Mobilteil, dass sie in Deckung bringbar ist. Von Vorteil ist dabei, dass eine störungsfreie Datenübertragung ermöglicht ist.

Bei einer vorteilhaften Ausgestaltung ist die von der ersten und zweiten Teilwicklung der ersten und zweiten Antenne umwickelte Fläche eben. Von Vorteil ist dabei, dass die Wicklungen einfach fertigbar sind, beispielsweise als Flachwicklung auf einer jeweiligen Leiterplatte.

Bei einer vorteilhaften Ausgestaltung ist die die Teilwicklungen der ersten Antenne und/oder die erste Antenne aufnehmende Ebene parallel zu der die Teilwicklungen der zweiten Antenne und/oder die zweite Antenne aufnehmende Ebene angeordnet. Von Vorteil ist dabei, dass ein gutes Signal-Rausch-Verhältnis bei der Datenübertragung erreichbar ist.

Bei einer vorteilhaften Ausgestaltung ist die erste Antenne mit dem Mobilteil an eine derartige Position verfahrbar, dass die senkrechte Projektion der ersten Antenne in die die zweite Antenne aufnehmende Ebene deckungsgleich ist zur zweiten Antenne und/oder die senkrechte Projektion der ersten Antenne in die die zweite Antenne aufnehmende Ebene den Schwerpunkt der ersten Antenne in den Schwerpunkt der zweiten Antenne abbildet. Von Vorteil ist dabei, dass ein gutes Signal-Rausch-Verhältnis bei der Datenübertragung erreichbar ist.

Bei einer vorteilhaften Ausgestaltung ist am Mobilteil eine elektronische Schaltung angeordnet, die mit der ersten Antenne verbunden ist, über welche ein erster elektromagnetischer Wellenzug absendbar und ein nachfolgend eintreffender elektromagnetischer Wellenzug empfangbar ist,
wobei am stationären Teil eine elektronische Schaltung angeordnet ist, die einen Speicher aufweist und mit der zweiten Antenne verbunden ist, insbesondere wobei die elektronische Schaltung aus dem ersten Wellenzug versorgbar ist,
wobei, insbesondere als Antwort auf den ersten Wellenzug, im Speicher gespeicherte Daten mittels der zweiten Antenne absendbar und als nachfolgend bei der ersten Antenne eintreffender elektromagnetischer Wellenzug empfangbar sind und der elektronischen Schaltung im Mobilteil zuleitbar sind. Von Vorteil ist dabei, dass ein RFID Transponder sogar im starken Feld eines Primärleiters, der mit derselben oder einer anderen Frequenz beaufschlagt wird, betreibbar ist. Der Strom im Primärleiter darf dabei das Tausendfache des Antennenstroms für die Datenübertragung betragen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

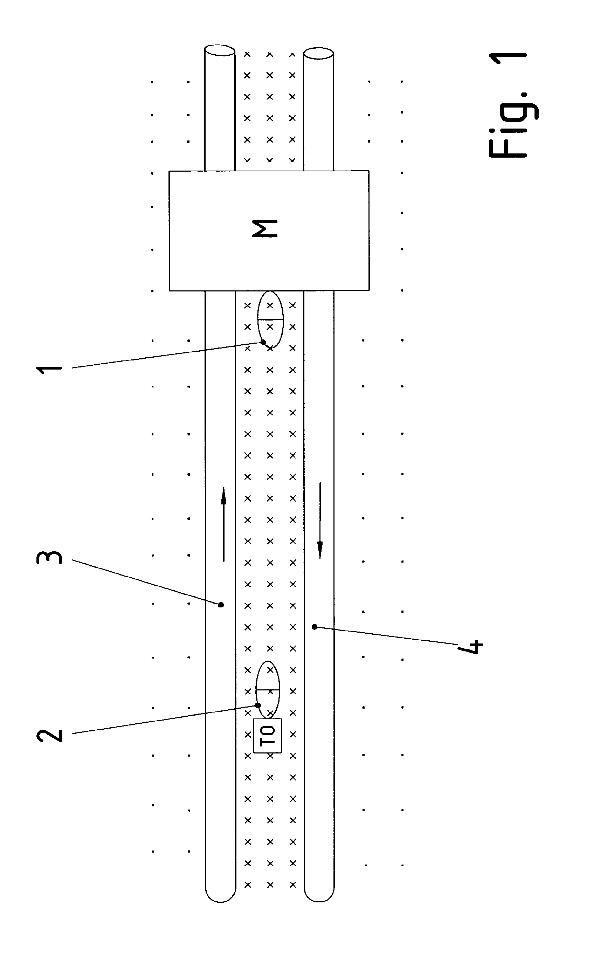

In der Figur 1 ist eine schematische Draufsicht auf eine erfindungsgemäße Anlage gezeigt, wobei ein stationärer Anlagenteil 2 einen mit Wechselstrom beaufschlagten Primärleiterschleife aufweist, die einen Hinleiter 3 und einen dazu parallel verlegten Rückleiter 4 aufweist. Ein entlang dem Hinleiter 3 und dem Rückleiter 4 bewegbar angeordnetes Teil, insbesondere Mobilteil M, weist eine Sekundärwicklung auf, die induktiv ankoppelbar ist an den Hinleiter 3 und/oder Rückleiter 4, so dass Energie übertragbar ist ans Mobilteil M und dieses hierdurch versorgbar ist.

Wie in Figur 1 gezeigt, ist ein Transponder TO stationär angeordnet.

In der Figur 2 ist der Transponder TO separat dargestellt. Er weist eine Antenne 2 auf, die mit dem Transponder TO verbunden ist. Somit ist ein Abfragesignal empfangbar und ein Antwortsignal vom Transponder TO absendbar.

In der Figur 3 ist der entsprechende RFID Transceiver gezeigt, der mit einer am Mobilteil M angeordneten Antenne 1 verbunden ist. Somit ist vom Mobilteil M aus ein Abfragesignal absendbar und ein vom Transponder TO gesendetes Antwortsignal empfangbar.

Dabei sind beide Antennen im Bereich hoher von der Primärleiterschleife erzeugten Feldstärke angeordnet.

Um die Datenübertragung zwischen den Antennen (1, 2) ungestört vom von der Primärleiterschleife erzeugten Feld Datenübertragung zwischen beiden Antennen (1, 2) zu ermöglichen, weisen beide Antennen (1, 2) jeweils eine erste und zweite Teilwicklung auf.

Dabei sind die beiden Teilwicklungen einer jeweiligen Antenne (1, 2) mit einem derartigen Wicklungssinn und mit einer derartigen Wicklungszahl ausgeführt, dass die vom im Wesentlichen homogenen Feld der Primärleiterschleife induzierten Spannungen betragsgleich sind und entgegengesetztes Vorzeichen aufweisen. Vorzugsweise ist hierzu der Wicklungssinn der beiden Teilwicklungen zueinander entgegengesetzt.

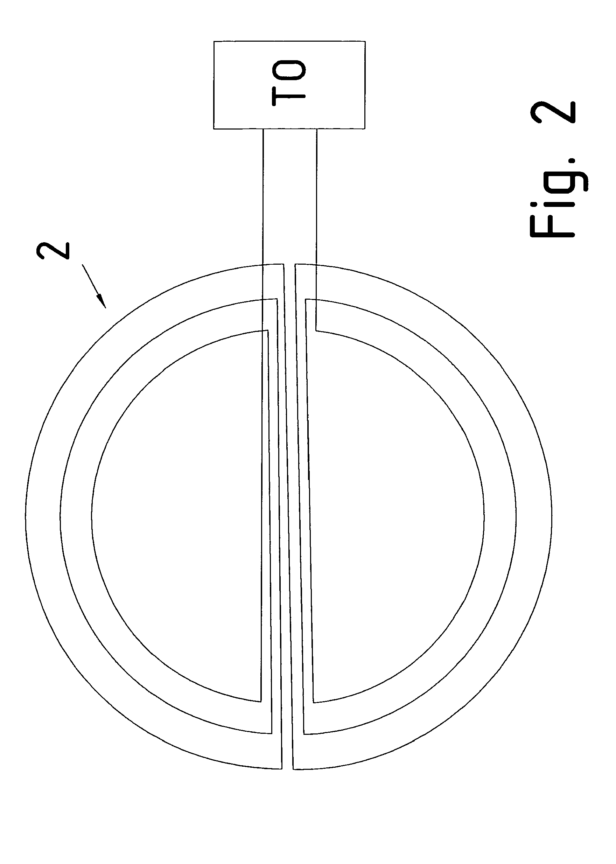

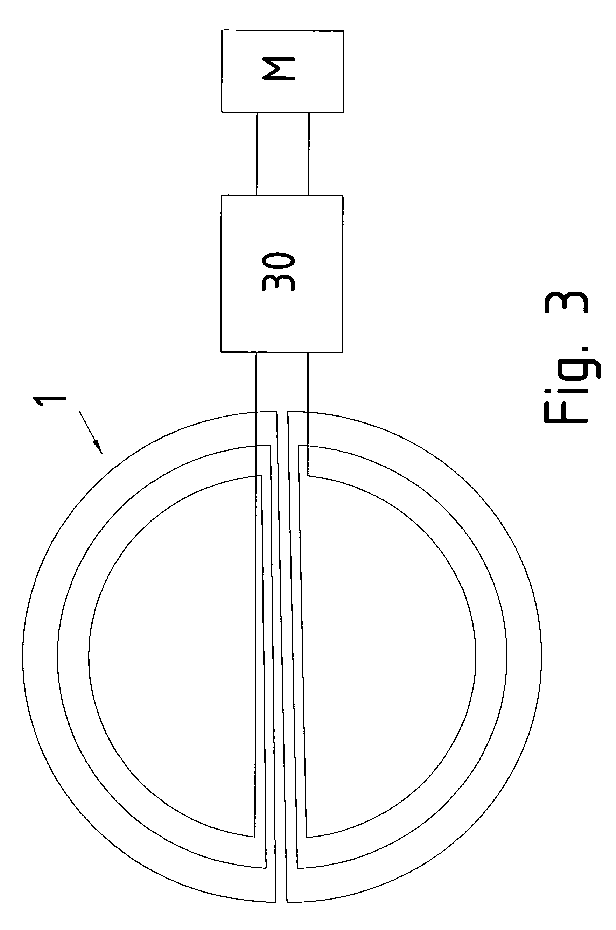

Wie in Figur 2 und 3 deutlich gezeigt, ist die obere Wicklung halbkreisförmig und die untere Wicklung ebenfalls halbkreisförmig ausgeführt und weisen entgegengesetzten Wicklungssinn zueinander auf. Auf diese Weise ist die induzierte Spannung nur abhängig von der jeweils anderen, entsprechend ausgeführten Antenne aber nicht vom Feld der Primärleiterschleife, solange dieses im Bereich der Antenne jeweils im Wesentlichen homogen verläuft.

Daher sind die Antennen bevorzugt in der Mittenebene zwischen Hinleiter 3 und Rückleiter 4 angeordnet.

Die Antenne 1 des Mobilteils M wird beim Verfahren des Mobilteils M derart bewegt, dass sie auch in Deckung bringbar ist mit der stationär angeordneten Antenne 2. An dieser Deckungsposition, wenn also die senkrechte Projektion der Antenne 1 in die die Antenne 1 aufnehmende Ebene deckungsgleich ist, ergibt sich die optimale Datenübertragung. Bei realem Betrieb sind jedoch kleine Abweichungen unschädlich.

Auf diese Weise sind also RFID Transponder verwendbar im starken Feld einer Anlage.

Der RFID Transponder TO ist sogar innerhalb der Primärleiterschleife positionierbar und ablesbar.

Der RFID Transceiver 30 ist in einem Schreib-Lese-Gerät anordenbar, so dass das Mobilteil die im Transponder TO gespeicherten Daten auslesen kann. Darüber hinaus sind auch Daten vom Mobilteil mittels des Schreib-Lese-Geräts zum Transponder TO übertragbar und dort abspeicherbar.

### Bezugszeichenliste

1 Antenne am Mobilteil M
2 Antenne am stationären Teil der Anlage
3 Hinleiter
4 Rückleiter
30 RFID Transceiver

M Mobilteil
TO RFID Transponder

## Patentansprüche

1. Anlage mit einem stationären Teil und einem dazu relativ bewegbar angeordneten Mobilteil,
wobei das Mobilteil eine Sekundärwicklung aufweist, die induktiv an einen langgestreckt im stationären Teil der Anlage angeordneten Primärleiter angekoppelt ist,
**wobei** am Mobilteil eine erste Antenne (1) und am stationären Teil eine zweite Antenne (2) angeordnet ist,
wobei jede Antenne (1, 2) als Wicklung mit Mittelanzapfung ausgeführt ist, wobei die so gebildeten ersten und zweiten Teilwicklungen voneinander beabstandete umwickelte Flächen aufweisen und jeweils eine derartige Wicklungszahl und eine derartig große umwickelte Fläche aufweisen, dass die von einem im Raumbereich der Antenne (1, 2) homogenen Wechsel-Magnetfeld induzierten Spannungen betragsgleich sind,
**wobei die zweite Antenne (2) symmetrisch zum Primärleiter angeordnet ist, also mittig zu einem als Hinleiter fungierenden Primärleiterabschnitt und als Rückleiter fungierenden Primärleiterabschnitt,**
**wobei die zweite Antenne (2), also deren umwickelte Fläche, parallel zu der von dem als Hinleiter fungierenden Primärleiterabschnitt und von dem als Rückleiter fungierenden Primärleiterabschnitt aufgespannten Ebene ausgerichtet ist,**
**wobei am Mobiiteil eine elektronische Schaltung angeordnet ist, die mit der ersten Antenne (1) verbunden ist, über welche ein erster elektromagnetischer Wellenzug absendbar und ein nachfolgend eintreffender elektromagnetischer Wellenzug empfangbar ist,**
**wobei am stationären Teil eine elektronische Schaltung angeordnet ist, die einen Speicher aufweist und mit der zweiten Antenne (2) verbunden ist, wobei die elektronische Schaltung aus dem ersten Wellenzug versorgbar ist,**
**wobei als Antwort auf den ersten Wellenzug im Speicher gespeicherte Daten mittels der zweiten Antenne (2) absendbar und als nachfolgend bei der ersten Antenne (1) eintreffender elektromagnetischer Wellenzug empfangbar sind und der elektronischen Schaltung im Mobilteil zuleitbar sind.**

2. Anlage mit einem stationären Teil und einem dazu relativ bewegbar angeordneten Mobilteil,
wobei das Mobilteil eine Sekundärwicklung aufweist, die induktiv an einen langgestreckt im stationären Teil der Anlage angeordneten Primärleiter angekoppelt ist,
**wobei** am Mobilteil eine erste Antenne (1) und am stationären Teil eine zweite Antenne (2) angeordnet ist,
wobei jede Antenne (1, 2) eine erste Teilwicklung und eine zweite Teilwicklung aufweist, welche jeweils eine derartige Wicklungszahl und einen derartigen Wicklungssinn und eine derartig große umwickelte Fläche aufweisen, dass die von einem homogenen Wechsel-Magnetfeld induzierten Spannungen betragsgleich sind und entgegengesetztes Vorzeichen aufweisen,
**wobei die zweite Antenne (2) symmetrisch zum Primärleiter angeordnet ist, also mittig zu einem als Hinleiter fungierenden Primärleiterabschnitt und als Rückleiter fungierenden Primärleiterabschnitt,**
**wobei die zweite Antenne (2), also deren umwickelte Fläche, parallel zu der von dem als Hinleiter fungierenden Primärleiterabschnitt und von dem als Rückleiter fungierenden Primärleiterabschnitt aufgespannten Ebene ausgerichtet ist,**
**wobei am Mobilteil eine elektronische Schaltung angeordnet ist, die mit der ersten Antenne (1) verbunden ist, über welche ein erster elektromagnetischer Wellenzug absendbar und ein nachfolgend eintreffender elektromagnetischer Wellenzug empfangbar ist,**
**wobei am stationären Teil eine elektronische Schaltung angeordnet ist, die einen Speicher aufweist und mit der zweiten Antenne (2) verbunden ist, wobei die elektronische Schaltung aus dem ersten Wellenzug versorgbar ist,**
**wobei als Antwort auf den ersten Wellenzug im Speicher gespeicherte Daten mittels der zweiten Antenne (2) absendbar und als nachfolgend bei der ersten Antenne (1) eintreffender elektromagnetischer Wellenzug empfangbar sind und der elektronischen Schaltung im Mobilteil zuleitbar sind.**

3. Anlage nach Anspruch 1 oder 2,
**dadurch gekennzeichnet, dass**
die Wicklungszahl der Teilwicklungen gleich ist
und/oder dass die umwickelte Fläche betragsgleich ist
und/oder dass der Wicklungssinn der Teilwicklungen entgegengesetzt ausgeführt ist.

4. Anlage nach einem der vorangegangenen Ansprüche,
**dadurch gekennzeichnet, dass**
die erste und zweite Antenne (1, 2) gleichartig, **also auch** baugleich, ausgeführt sind.

5. Anlage nach einem der vorangegangenen Ansprüche,
**dadurch gekennzeichnet, dass**
die erste Antenne (1) derart bewegbar ist mit dem Mobilteil, dass sie in Deckung **bringbar ist.**

6. Anlage nach einem der vorangegangenen Ansprüche,
**dadurch gekennzeichnet, dass**
die von der ersten und zweiten Teilwicklung der ersten und zweiten Antenne (1, 2) umwickelte Fläche eben ist
und/oder dass
die die Teilwicklungen der ersten Antenne (1) und/oder die erste Antenne (1) aufnehmende Ebene
parallel zu der die Teilwicklungen der zweiten Antenne (2) und/oder die zweite Antenne (2) aufnehmende Ebene angeordnet ist.

7. Anlage nach einem der vorangegangenen Ansprüche,
**dadurch gekennzeichnet, dass**
die erste Antenne (1) mit dem Mobilteil an eine derartige Position verfahrbar ist, dass die senkrechte Projektion der ersten Antenne (1) in die die zweite Antenne (2) aufnehmende Ebene deckungsgleich ist zur zweiten Antenne (2) und/oder die senkrechte Projektion der ersten Antenne (1) in die die zweite Antenne (2) aufnehmende Ebene den Schwerpunkt der ersten Antenne (1) in den Schwerpunkt der zweiten Antenne (2) abbildet.

8. Anlage nach einem der vorangegangenen Ansprüche,
**dadurch gekennzeichnet, dass**
**der Primärleiter mit einem Wechselstrom zwischen 10 und 1000 kHz beaufschlagbar ist.**

9. **Anlage nach einem der vorangegangenen Ansprüche,**
**dadurch gekennzeichnet, dass**
**der Sekundärwicklung eine Kapazität parallel und/oder in Reihe zugeschaltet ist, dass die zugehörige Resonanzfrequenz der Frequenz des Wechselstroms entspricht,**

## Claims

1. System having a stationary part and a mobile part arranged such that it can be moved relative thereto,
wherein the mobile part has a secondary winding which is inductively coupled to a primary conductor arranged in an elongate manner in the stationary part of the system,
wherein a first antenna (1) is arranged on the mobile part and a second antenna (2) is arranged on the stationary part, wherein each antenna (1, 2) is configured as a winding having a centre tap, wherein the first and second partial windings thus formed have wound areas spaced apart from each other and respectively have a number of turns of such a number and a wound area of such a size that the voltages induced by a uniform alternating magnetic field in the spatial region of the antenna (1, 2) are of equal magnitude,
wherein the second antenna (2) is arranged symmetrically with respect to the primary conductor, i.e. centrally with respect to a primary conductor section functioning as forward conductor and a primary conductor section functioning as return conductor,
wherein the second antenna (2), i.e. its wound area, is oriented parallel to the plane defined by the primary conductor section functioning as forward conductor and by the primary conductor section functioning as return conductor, wherein an electronic circuit is arranged on the mobile part, which circuit is connected to the first antenna (1), via which a first electromagnetic wave train can be sent and a subsequently arriving electromagnetic wave train can be received,
wherein an electronic circuit is arranged on the stationary part, which circuit has a store and is connected to the second antenna (2), wherein the electronic circuit can be supplied from the first wave train,
wherein, as a reply to the first wave train, data stored in the store can be sent by means of the second antenna (2) and can be received as an electromagnetic wave train arriving subsequently at the first antenna (1) and can be supplied to the electronic circuit in the mobile part.

2. System having a stationary part and a mobile part arranged such that it can be moved relative thereto,
wherein the mobile part has a secondary winding which is inductively coupled to a primary conductor arranged in an elongate manner in the stationary part of the system,
wherein a first antenna (1) is arranged on the mobile part and a second antenna (2) is arranged on the stationary part,
wherein each antenna (1, 2) has a first partial winding and a second partial winding which respectively have a number of turns of such a number and a sense of winding of such a sense and a wound area of such a size that the voltages induced by a uniform alternating magnetic field are of equal magnitude and have opposite signs,
wherein the second antenna (2) is arranged symmetrically with respect to the primary conductor, i.e. centrally with respect to a primary conductor section functioning as forward conductor and a primary conductor section functioning as return conductor,
wherein the second antenna (2), i.e. its wound area, is oriented parallel to the plane defined by the primary conductor section functioning as forward conductor and by the primary conductor section functioning as return conductor,
wherein an electronic circuit is arranged on the mobile part, which circuit is connected to the first antenna (1), via which a first electromagnetic wave train can be sent and a subsequently arriving electromagnetic wave train can be received,
wherein an electronic circuit is arranged on the stationary part, which circuit has a store and is connected to the second antenna (2), wherein the electronic circuit can be supplied from the first wave train,
wherein, as a reply to the first wave train, data stored in the store can be sent by means of the second antenna (2) and can be received as an electromagnetic wave train arriving subsequently at the first antenna (1) and can be supplied to the electronic circuit in the mobile part.

3. System according to Claim 1 or 2,
**characterised in that**
the number of turns of the partial windings is equal
and/or **in that** the wound area is of equal magnitude
and/or **in that** the sense of winding of the partial windings is oppositely configured.

4. System according to one of the preceding claims,
**characterised in that**
the first and second antenna (1, 2) are configured to be of the same kind, i.e. also of the same construction.

5. System according to one of the preceding claims, **characterised in that**
the first antenna (1) is movable in such a manner with the mobile part that it can be made congruent.

6. System according to one of the preceding claims,
**characterised in that**
the area wound by the first and second partial winding of the first and second antenna (1, 2) is plane
and/or **in that**
the plane accommodating the partial windings of the first antenna (1) and/or the first antenna (1)
is arranged parallel to the plane accommodating the partial windings of the second antenna (2) and/or the second antenna (2).

7. System according to one of the preceding claims,
**characterised in that**
the first antenna (1) is movable with the mobile part to such a position that the perpendicular projection of the first antenna (1) into the plane accommodating the second antenna (2) is congruent with the second antenna (2) and/or the perpendicular projection of the first antenna (1) into the plane accommodating the second antenna (2) maps the centre of gravity of the first antenna (1) into the centre of gravity of the second antenna (2).

8. System according to one of the preceding claims,
**characterised in that**
an alternating current between 10 and 1000 kHz can be applied to the primary conductor.

9. System according to one of the preceding claims,
**characterised in that**
a capacitance can be connected in parallel and/or in series with the secondary winding, that the associated resonant frequency corresponds to the frequency of the alternating current,

## Revendications

1. Installation comprenant une partie fixe et une partie mobile pouvant être animée de mouvements relatifs par rapport à cette dernière,
ladite partie mobile présentant un enroulement secondaire couplé, par induction, à un conducteur primaire de forme allongée, disposé dans ladite partie fixe de l'installation, une première antenne (1) et une seconde antenne (2) étant implantées, respectivement, sur ladite partie mobile et sur ladite partie fixe,
chaque antenne (1, 2) étant réalisée sous la forme d'un enroulement à prise médiane, les premier et second enroulements partiels ainsi formés étant munis de surfaces mutuellement distantes, circonscrites par un enroulement, et étant respectivement dotés d'un nombre de spires tel, et d'une surface circonscrite par un enroulement qui offre un dimensionnement tel que les tensions, induites par un champ magnétique alternatif homogène dans la région de l'espace de ladite antenne (1, 2), soient affectées d'une même valeur,
la seconde antenne (2) étant disposée symétriquement par rapport au conducteur primaire, c'est-à-dire au centre vis-à-vis d'un segment de conducteur primaire remplissant la fonction d'un conducteur d'arrivée, et d'un segment de conducteur primaire remplissant la fonction d'un conducteur de retour,
ladite seconde antenne (2), et donc la surface de cette dernière qui est circonscrite par un enroulement, étant orientées parallèlement au plan sous-tendu par ledit segment du conducteur primaire remplissant la fonction d'un conducteur d'arrivée, et par ledit segment du conducteur primaire remplissant la fonction d'un conducteur de retour,
la partie mobile portant un circuit électronique raccordé à la première antenne (1), et par l'intermédiaire duquel un premier train d'ondes électromagnétiques peut être émis, et un train d'ondes électromagnétiques à occurrence ultérieure peut être reçu,
la partie fixe portant un circuit électronique pourvu d'une mémoire et raccordé à la seconde antenne (2), ledit circuit électronique pouvant être alimenté à partir dudit premier train d'ondes,
sachant qu'en réponse audit premier train d'ondes, des données stockées dans ladite mémoire peuvent être délivrées au moyen de la seconde antenne (2), peuvent être reçues en tant que train d'ondes électromagnétiques à occurrence ultérieure au niveau de la première antenne (1), et peuvent être dirigées vers le circuit électronique situé dans la partie mobile.

2. Installation comprenant une partie fixe et une partie mobile pouvant être animée de mouvements relatifs par rapport à cette dernière,
ladite partie mobile présentant un enroulement secondaire couplé, par induction, à un conducteur primaire de forme allongée, disposé dans ladite partie fixe de l'installation, une première antenne (1) et une seconde antenne (2) étant implantées, respectivement, sur ladite partie mobile et sur ladite partie fixe,
chaque antenne (1, 2) comportant un premier enroulement partiel et un second enroulement partiel qui sont dotés, respectivement, d'un nombre de spires tel, d'un sens de bobinage tel, et d'une surface circonscrite par un enroulement qui offre un dimensionnement tel que les tensions, induites par un champ magnétique alternatif homogène, soient affectées d'une même valeur et de signes opposés,
la seconde antenne (2) étant disposée symétriquement par rapport au conducteur primaire, c'est-à-dire au centre vis-à-vis d'un segment de conducteur primaire remplissant la fonction d'un conducteur d'arrivée, et d'un segment de conducteur primaire remplissant la fonction d'un conducteur de retour,
ladite seconde antenne (2), et donc la surface de cette dernière qui est circonscrite par un enroulement, étant orientées parallèlement au plan sous-tendu par ledit segment du conducteur primaire remplissant la fonction d'un conducteur d'arrivée, et par ledit segment du conducteur primaire remplissant la fonction d'un conducteur de retour,
la partie mobile portant un circuit électronique raccordé à la première antenne (1), et par l'intermédiaire duquel un premier train d'ondes électromagnétiques peut être émis, et un train d'ondes électromagnétiques à occurrence ultérieure peut être reçu,
la partie fixe portant un circuit électronique pourvu d'une mémoire et raccordé à la seconde antenne (2), ledit circuit électronique pouvant être alimenté à partir dudit premier train d'ondes,
sachant qu'en réponse audit premier train d'ondes, des données stockées dans ladite mémoire peuvent être délivrées au moyen de la seconde antenne (2), peuvent être reçues en tant que train d'ondes électromagnétiques à occurrence ultérieure au niveau de la première antenne (1), et peuvent être dirigées vers le circuit électronique situé dans la partie mobile.

3. Installation selon la revendication 1 ou 2,
**caractérisée par le fait que**
le nombre de spires des enroulements partiels est identique
et/ou que la surface circonscrite par un enroulement est affectée d'une même valeur et/ou que le sens de bobinage desdits enroulements partiels est orienté à l'opposé.

4. Installation selon l'une des revendications précédentes,
**caractérisée par le fait que**
les première et seconde antennes (1, 2) présentent une réalisation de même type, et donc également de même agencement structurel.

5. Installation selon l'une des revendications précédentes,
**caractérisée par le fait que**
la première antenne (1) peut être mue, avec la partie mobile, de façon telle qu'elle puisse être amenée en coïncidence.

6. Installation selon l'une des revendications précédentes,
**caractérisée par le fait que**
la surface, circonscrite par les premiers et seconds enroulements partiels des première et seconde antennes (1, 2), est de configuration plane
et/ou que
le plan, recevant la première antenne (1) et/ou les enroulements partiels de ladite première antenne (1),
est agencé parallèlement au plan recevant la seconde antenne (2) et/ou les enroulements partiels de ladite seconde antenne (2).

7. Installation selon l'une des revendications précédentes,
**caractérisée par le fait que**
la première antenne (1) peut être déplacée, avec la partie mobile, jusqu'à un emplacement tel que la projection verticale de ladite première antenne (1), dans le plan recevant la seconde antenne (2), soit en coïncidence avec ladite seconde antenne (2), et/ou que ladite projection verticale de la première antenne (1), dans ledit plan recevant la seconde antenne (2), reproduise le centre de gravité de ladite première antenne (1) dans le centre de gravité de ladite seconde antenne (2).

8. Installation selon l'une des revendications précédentes,
**caractérisée par le fait que**
le conducteur primaire peut être sollicité par un courant alternatif compris entre 10 et 1 000 kHz.

9. Installation selon l'une des revendications précédentes,
**caractérisée par le fait**
**qu'**un condensateur est mis en circuit avec l'enroulement secondaire, en parallèle et/ou en série, et que la fréquence de résonance associée correspond à la fréquence du courant alternatif.
